# EUROPÄISCHE PATENTSCHRIFT

(11) **EP 0 877 782 B1**
(45) Veröffentlichungstag und Bekanntmachung des Hinweises auf die Patenterteilung: **21.07.1999**
(21) Anmeldenummer: 96943128.7
(22) Anmeldetag: 16.12.1996
(51) Int. Cl.: C10M 133/54, C10L 1/22, C08F 8/32, C08F 8/30, C07C 209/60, C10M 133/06

(54) **SEKUNDÄRE POLYISOBUTENAMINE ENTHALTENDE KRAFT- ODER SCHMIERSTOFFZUSAMMENSETZUNGEN**
FUEL OR LUBRICANT COMPOSITIONS CONTAINING SECONDARY POLYISOBUTENE AMINES
COMPOSITIONS DE CARBURANTS OU DE LUBRIFIANTS RENFERMANT DES POLYISOBUTENE-AMINES SECONDAIRES

(30) Priorität: 21.12.1995 DE 19548145
(43) Veröffentlichungstag der Anmeldung: 18.11.1998
(73) Patentinhaber: BASF AKTIENGESELLSCHAFT, 67056 Ludwigshafen (DE)
(72) Erfinder: RÖPER, Michael, D-67157 Wachenheim (DE); GEISSLER, Bernhard, D-67281 Kirchheim (DE); LANGGUTH, Ernst, D-67281 Kirchheim (DE); KNEUPER, Heinz-Josef, D-68163 Mannheim (DE)
(86) Internationale Anmeldenummer: EP9605635
(87) Internationale Veröffentlichungsnummer: WO9723586

(56) Entgegenhaltungen:
- EP-A- 0 457 386
- EP-A- 0 541 176
- EP-A- 0 578 323
- WO-A-95/24431
- DE-A- 3 611 230
- DE-A- 19 525 938
- FR-A- 2 016 126
- US-A- 3 574 576
- US-A- 3 801 642

## Beschreibung

Die Erfindung betrifft Polyisobutenamine enthaltend Kraft- oder Schmierstoffzusammensetzungen mit einem Gehalt von sekundären Polyisobutenaminen, wobei die Menge des sekundären Polyisobutenamins gegenüber etwa vorhandenen entsprechenden primären oder tertiären Polybutenaminen überwiegt, ein Verfahren zur Herstellung von Polyisobutenamingemischen, die überwiegend sekundäre Polyisobutenamine enthalten, sowie diese neuen Gemische und deren Verwendung als Kraft- oder Schmierstoffadditive.

Aus EP 0 244 616 ist bekannt, Polyisobutenamine der Formel 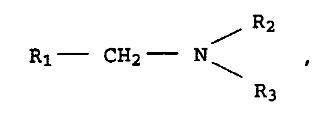 in der R₁ einen Polyisobutenrest und R₂ und R₃ unter anderem Wasserstoff bedeuten als Zusatz zu Kraft- und Schmierstoffen zu verwenden. Nach dem dort beschriebenen Herstellungsverfahren wird in einer ersten Stufe Polyisobuten zu einem Polyisobutenaldehyd oder einem Polyisobutenalkohol

R₁-CH = O bzw. R₁-CH₂OH

mit Cobalt- oder Rhodiumkatalysatoren bei Temperaturen zwischen 80 und 200°C und CO/H₂-Drücken von bis zu 600 bar hydroformyliert.

In einer zweiten Stufe erfolgt in Gegenwart von Ammoniak mittels eines geeigneten Katalysators bei erhöhten Druck und erhöhter Temperatur die hydrierende Aminierung zu einem Polyisobutenaminprodukt, das überwiegend aus dem primären Amin R₁-CH₂-NH₂ und in untergeordneten Mengen aus dem sekundären Amin 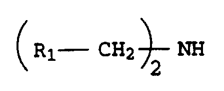 und tertiären Amin 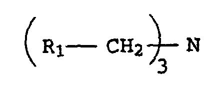 besteht.

Kraft- oder Schmierstoffzusammensetzungen, die dieses Polyisobutenaminprodukt als Zusatz enthalten, zeichnen sich durch stark verbesserte Anwendungseigenschaften aus, insbesondere durch eine Detergentienwirkung und damit Sauberhaltung der feinen Kanäle des Vergasers, sowie eine Vermeidung zu Ablagerungen an den Ventilen. Dadurch ist eine bessere Verbrennung des Kraftstoffs und ein geringerer Schadstoffausstoß gewährleistet.

Obgleich das genannte Polyisobutenaminprodukt ausgezeichnete anwendungstechnische Eigenschaften aufweist, hat sich überraschenderweise gezeigt, daß eine weitere Verbesserung der Detergenswirkung möglich ist, wenn man als Kraftstoff- oder Schmierstoffzusätze ein Polyisobutenamingemisch verwendet, welcher überwiegend sekundäre Polyisobutenamine enthält.

Demgemäß ist Gegenstand der vorliegenden Erfindung eine Kraft- oder Schmierstoffzusammensetzung, die wirksame Mengen von mindestens einem sekundären Polybutenamin der Formel Ia 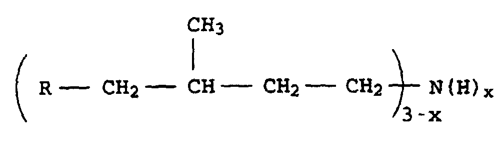 enthält,
in der R einen Polyisobutenrest mit 6 bis 45 Isobutyleneinheiten bedeutet, wobei bis zu 20 % der Isobutyleneinheiten durch n-Butyleneinheiten ersetzt sein können und x für die Zahl 1 steht, mit der Maßgabe, daß die Menge des sekundären Polyisobutenamins größer ist als die Menge eines gegebenenfalls ebenfalls enthaltenen primären Polyisobutenamins der Formel Ia (x = 2) oder tertiären Polyisobutenamins der Formel Ia (x = 0).

Vorzugsweise beträgt der Gehalt des sekundären Polyisobutenamins mindestens 50 Gew.-%, bezogen auf den Gesamtgehalt an primären, sekundären und tertiären Polyisobutenaminen.

Nach einer weiteren bevorzugten Ausführungsform werden solche sekundären Polyisobutenamine der Formel Ia verwendet, bei denen der Polyisobutenrest ein gegenüber den üblichen primären Polyisobutenaminen verringerte Molekulargewicht aufweist und demgemäß n nur die Zahlen 6 bis 20 bedeutet.

Da bei der oben erwähnten vorbekannten 2-stufigen Methode der Hydroformylierung und anschließender Aminierung das sekundäre Polyisobutenamin nur in sehr geringen Mengen gebildet wird; betrifft die Erfindung auch ein neues Verfahren zur Herstellung von Polyisobutenamingemischen, die überwiegend sekundäres Polyisobutenamin der Formel Ia (x = 1) enthalten.

Es wurde nun gefunden, daß man Gemische aus primären, sekundären und tertiären Polyisobutenaminen mit einem Gehalt von überwiegend z.B. 60 Gew.% an sekundären Polyisobutenaminen der Formel Ia (x = 1) erhält, wenn man die Hydroformylierung und Aminierung gleichzeitig durchführt, d.h. wenn man Polyisobuten der Formel II 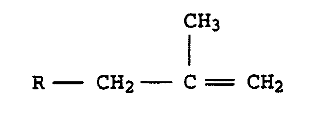 in der R die oben angegebene Bedeutung hat und n die Zahlen 6 bis 45 bedeutet in Gegenwart von mindestens äquivalenten Mengen, vorzugsweise einem Überschuß und insbesondere der 1 bis 100fach äquivalenten Menge Ammoniak unter Einwirkung eines Rhodiumkatalysators, der in der Lage ist, unter Reaktionsbedingungen Rhodiumcarbonylkomplexe zu bilden, bei Temperaturen von 80 bis 200°C und Drücken bis 600 bar mit CO/H₂ hydroformyliert und im gleichen Schritt aminiert.

Besonders vorteilhaft ist dabei zumindest die teilweise Verwendung von wäßrigem Ammoniak, da so keine störende Carbaminatausfällung zu beobachten ist.

In der Regel wird ein trägerfreier Rhodiumkatalysator verwendet. Insbesondere kommt als Katalysator Rhodiumacetat, Rodiumnitrat, Rhodiumdicarbonylacetylacetonat oder Triphenylphosphinrhodiumcarbonylwasserstoff oder Mischungen der Rhodiumverbindungen mit Phosphinen oder Phosphiten in Betracht.

Aus EP 0 457 386, Beispiel 5 ist zwar bekannt, daß bei der einstufigen Hydroformylierung und Aminierung überwiegend sekundäre Amine entstehen, doch ist dies nur für 1-Octen als Ausgangsmaterial und Ruthenium als Katalysator beschrieben.

Weiterhin ist in EP 0 578 323, jedoch allein in der Zusammenfassung, die Verwendung von Ammoniak für die gleichzeitige Hydroformylierung und Aminierung genannt. In der speziellen Beschreibung und in den Beispielen ist dagegen die Umsetzung von Polyisobuten nur mit bestimmten primären Aminen, mit denen notwendiger sekundäre Polyisobutenamine anderer Struktur entstehen, beschrieben.

Die erfindungsgemäß erhältlichen Gemische aus Polyisobutenaminen (primär, sekundär und tertiär) der Formel Ia sind somit neu und sind auch als neue Stoffmischung Gegenstand dieser Erfindung, sowie deren Verwendung als Kraftstoffzusatz.

Diese Gemische haben in der Regel eine Zusammensetzung von 0,5 bis 30 Gew.% primäre, 50 bis 99 Gew.% sekundäre und 0,5 bis 30 Gew.-% tertiäre Polyisobutenamine der Formel Ia.

Die erfindungsgemäßen Gemische können als solche oder auch im Gemisch mit andern überwiegend primären Polyisobutenaminen oder anderen sekundären Polyisobutenaminen angewendet werden, sofern ein wirksamer Gehalt der sekundären Polyisobutenamine der Formel I vorliegt z.B. mindestens 20 ppm in Kraftstoffen bzw. 0,5 Gew.% in Schmierstoffen.

Unter Kraftstoffen werden Kraftstoffe für Verbrennungsmotoren vor allem für Ottomotoren verstanden. Die Zusätze der Polyisobutenamine zu diesen Kraftstoffen betragen in der Regel 20 bis 5000 mg/kg, insbesondere 50 bis 200 mg/kg Kraftstoff.

In den erfindungsgemäßen Schmierstoffen können die Polyisobutenamine beispielsweise in Mengen von 0,5 bis 15 Gew.-%, insbesondere 0,5 bis 10 Gew.-% jeweils bezogen auf das Gesamtgewicht vorliegen.

Im einzelnen führt man das Herstellungsverfahren zweckmäßig in Gegenwart eines trägerfreien Rhodiumkatalysators durch, der in der Lage ist, unter Reaktionsbedingungen Rhodiumcarbonylkomplexe zu bilden. Geeignete Ausgangsverbindungen sind beispielsweise Rhodiumacetat, Rhodiumnitrat, Rh(CO)₂acac oder HRh(PPh₃)₃CO.

Die Reaktion kann ebenfalls in Gegenwart weiterer Additive durchgeführt werden; diese sind jedoch für das Gelingen der Reaktion von untergeordneter Bedeutung. Beispiele sind: ein- oder mehrzähnige Donorliganden der Gruppe V des Periodensystems, insbesondere Stickstoff- und Phosphorverbindungen, ein- oder mehrzähnige Donorliganden der Gruppe VI des Periodensystems, insbesondere Sauerstoff- und Schwefelverbindungen. Beispiele sind: Pyridin, Picoline, 2,2'-Bipyridine, Phosphine, wie Triphenylphosphin, Phosphite, wie Tris(2,4-di-tert.-butylphenyl)phosphit, Tris(2,4 -di-tert.-butylphenyl)phosphit, aliphatische oder aromatische Alkohole oder Ether, Carbonsäurederivate und aliphatische oder aromatische Thiole oder Thioether.

Zur besseren Handhabbarkeit der Polyolefine kann die Reaktion in geeigneten, inerten Lösungsmitteln durchgeführt werden. Geeignet sind aliphatische (offenkettige oder cyclische) Kohlenwasserstoffe, aromatische Kohlenwasserstoffe, aliphatische (offenkettige oder cyclische) Ether, aromatische Ether, Polyether und tertiäre Alkyl- oder Arylamine. Auch überschüssiges Ammoniak kann als Lösungsmittel verwendet werden.

Die Reaktion wird bei erhöhtem Druck von bis zu 600 bar durchgeführt, wobei der Bereich von 100 bis 350 bar bevorzugt wird. Geeignete Temperaturen sind 80 - 200°C, wobei der Bereich von 110 - 180°C und insbesondere von 130 - 170°C bevorzugt wird.

Geeignete Polyisobutene weisen eine Molmasse von 250 - 3000 g/mol auf, insbesondere 500 - 1500 g/mol. Sie enthalten mindestens eine Doppelbindung pro Molekül, wobei die Lage der Doppelbindung nicht kritisch ist. Besonders hohe Ausbeuten werden jedoch mit Polyisobutenen mit endständiger Doppelbindung erhalten. Da bei den sekundären Polyisobutenaminen die Gesamtmolmasse, bezogen auf das eingesetzte Polyisobutenamin sich verdoppelt, kann nach einer Ausführungsform der Erfindung auch von Polyisobuten geringerer Molmasse z.B. 250 bis 800 g/mol ausgegangen werden.

Ammoniak kann der Reaktionsmischung als wäßrige Lösung oder in reiner Form zu Beginn oder im Verlauf der Reaktion zugesetzt werden, wobei die Arbeitsweise mit wäßrigem Ammoniak bevorzugt ist. Dabei wird Ammoniak in der Regel im Überschuß angewendet z.B. in bis zu 100fachen stöchiometrischen Überschuß.

### Beispiel 1

a) Herstellung
In einen Schüttelautoklaven werden 300 g Polyisobuten (BASF ES 3250 Molmasse Mₙ 1000 g/mol, Anteil der endständigen Doppelbindungen laut ¹³C-NMR-Analyse 85 %), 300 g Mihagol M (C₁₂ - C₁₄-Paraffine, Firma Wintershall), 102 g einer wäßrigen, 25%igen NH₃-Lösung (Molverhältnis NH₃ zu Polyisobuten = 5), sowie 0,13 g Rhodiumdicarbonyl-acetylacetonat, entsprechend einem Rhodiumgehalt von 85 ppm auf die Gesamtmischung, eingewogen. Der Autoklav wird in eine Schüttelapparatur eingebaut, mit Synthesegas (äquimolare Mischung von CO und H₂) gespült, mit Synthesegas unter einen Druck von 260 - 280 bar gesetzt und auf 150°C aufgeheizt. Die Reaktion wird unter diesen Bedingungen fünf Stunden lang durchgeführt. Nach Abkühlen und Entspannen wird die wäßrige Phase abgetrennt und die organische Phase bei vermindertem Druck (bis 150°C/1 mbar) vom Lösungsmittel und Ammoniakresten befreit.
Von den erhaltenen Produkt wurden Kennzahlen, eine säulenchromatographische Bestimmung der Ausbeute an funktionalisiertem Produkt, eine massenspektrometrische (MALDI-TOF) Analyse und ein Motortest an einem 4-Zylinder-Ottomotor (Opel Kadett 1200) zur Wirksamkeit bei der Reinhaltung von Einlaßventilen durchgeführt.
Es wurden folgende Ergebnisse erzielt:

| | | |
|---|---|---|
| Ausbeute an funktionalisiertem Produkt (säulenchromatographisch): | | 84 % |
| | | |
| Kennzahlen, mg KOH/g | Aminzahl: | 18 |
| | sek. Aminzahl | 13 |
| | tert. Aminzahl | 4 |
| | Carbonylzahl | 2 |
| | Alkohol zahl | 4 |
| | | |
| Molmasse (GPC, Mₙ), g/mol | | 1985 |

Die massenspektrometrische Analyse (MALDI-TOF-MS) belegt zweifelsfrei die Präsenz primärer, sekundärer und tertiärer Polyisobutenamine. Aufgrund der Kennzahlen liegen diese im Molverhältnis von 1:13:4 vor.
b) Motortest (4-Zylinder Ottomotor Opel Kadett 1200)
Bedingungen: 200 mg/kg Polyisobutenamingemisch gemäß (a), (100 %) in Eurosuper bleifrei,

| | Ablagerungen pro Ventil, mg | | | |
|---|---|---|---|---|
| Ventil Nr. | 1 | 2 | 3 | 4 |
| Additiviert | 3 | 20 | 3 | 6 |
| Grundwert | 554 | 343 | 293 | 484 |

Die gute Eignung als Ventilreinhaltemittel wird durch einen Durchschnittswert von 8 mg Ablagerungen pro Ventil gegenüber 419 mg Ablagerungen ohne Additivierung unter identischen Testbedingungen deutlich.
c) Vergleich mit einem vorwiegend primären Polyisobutenamin
Der Vergleich der thermischen Stabilität gegenüber Polyisobutenamin, gemäß EP 0 244 616, Beispiel 1, zeigt die verbesserten Eigenschaften des erfindungsgemäßen Polyisobutenamingemisches aus Beispiel 1:

| | Vergleich EP 0 244 616 Beispiel 1 | PIB-Amin-Gemisch gemäß vorliegendem Beispiel 1 |
|---|---|---|
| Gewichtsverlust unter Stickstoff, bei | | |
| 200°C | 3 % | 0 % |
| 250°C | 5 % | 2 % |
| 300°C | 13 % | 3 % |
| 350°C | 42 % | 14 % |
| 400°C | 100 % | 97 % |

| Gewichtsverlust an Luft, bei | | |
|---|---|---|
| 200°C | 6 % | 3 % |
| 250°C | 17 % | 16 % |
| 300°C | 50 % | 44 % |
| 350°C | 96 % | 85 % |
| 400°C | 100 % | 100 % |

Die höhere Stabilität wird insbesondere bei den Versuchen unter Stickstoff offensichtlich.

### Beispiel 2:

Die Umsetzung wurde wie in Beispiel 1 beschrieben wiederholt, die Reaktion jedoch bei 140°C durchgeführt, wobei zusätzlich zu der wäßrigen Ammoniak-Lösung 87 g wasserfreier Ammoniak über eine Druckvorlage in den Autoklaven gegeben wurden (Gesamtmolverhältnis NH₃:PIB = 20). Die Aufarbeitung erfolgte wie in Beispiel 1. Von dem erhaltenen Produkt wurden Kennzahlen sowie eine säulenchromatographische Bestimmung der Ausbeute an funktionalisiertem Produkt ermittelt.

Es wurden folgende Ergebnisse erzielt:

| | | |
|---|---|---|
| Ausbeute an funktionalisiertem Produkt säulenchromatographisch): | | 80 % |
| | | |
| Kennzahlen, mg KOH/g: | Aminzahl | 26 |
| | prim. Aminzahl | 1 |
| | sek. Aminzahl | 22 |
| | tert. Aminzahl | 3 |
| | Carbonylzahl | 1 |
| | Alkoholzahl | 2 |
| | | |
| Molmasse (GPC, Mₙ), g/mol: | | 2022 |

Das Beispiel zeigt, daß durch Erhöhen des Ammoniaküberschusses die Aminausbeute gesteigert werden kann. Das Hauptprodukt ist jedoch weiterhin das sekundäre Polyisobutenamin.

## Patentansprüche

1. Polyisobutenamine enthaltende Kraft- oder Schmierstoffzusammensetzung, dadurch gekennzeichnet, daß sie mindestens ein sekundäres Polyisobutenamin der Formel I 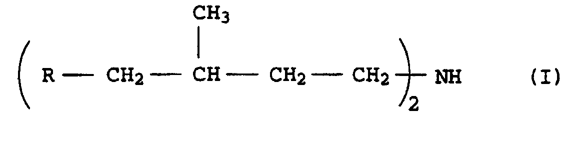 enthält,
in der R einen Polyisobutenrest mit 6 bis 45 Isobutyleneinheiten bedeutet, wobei bis zu 20 % der Isobutyleneinheiten durch n-Butyleneinheiten ersetzt sein können, mit der Maßgabe, daß die Menge des sekundären Polyisobutenamins größer ist als die Menge eines gegebenenfalls ebenfalls enthaltenen entsprechenden primären oder tertiären Polyisobutenamins.

2. Kraftstoffzusammensetzung gemäß Anspruch 1, dadurch gekennzeichnet, daß sie mindestens 20 ppm eines sekundären Polyisobutenamins der Formel I gemäß Anspruch 1 enthält.

3. Schmierstoffzusammensetzung gemäß Anspruch 1, dadurch gekennzeichnet, daß sie mindestens 0,5 Gew.-%, bezogen auf den Schmierstoff, eines sekundären Polyisobutenamins der Formel I gemäß Anspruch 1 enthält.

4. Kraft- oder Schmierstoffzusammensetzung gemäß Anspruch 1, dadurch gekennzeichnet, daß mindestens 50 Gew.-%, bezogen auf den Gesamtgehalt an primären, sekundären und tertiären Polyisobutenaminen, sekundäre Polyisobutenamine der Formel I sind.

5. Kraft- und Schmierstoffzusammensetzung gemäß Anspruch 1, dadurch gekennzeichnet, daß sie sekundäre Polyisobutenamine der Formel I enthalten, in der der Polyisobutenrest 8 bis 35 Isobutyleneinheiten aufweist.

6. Verfahren zur Herstellung eines Gemisches von Polyisobutenaminen, das überwiegend aus sekundären Polyisobutenaminen der Formel I gemäß Anspruch 1 besteht, dadurch gekennzeichnet, daß man überwiegend endständige Doppelbindungen aufweisende Polyisobutene der Formel II 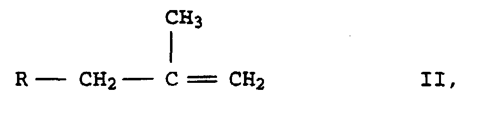 in der R die in Anspruch 1 angegebene Bedeutung hat, in Gegenwart der mindestens äquivalenten Menge Ammoniak unter Einwirkung eines Rhodiumkatalysators, der in der Lage ist, unter Reaktionsbedingungen Rhodiumcarbonylkomplexe zu bilden, bei Temperaturen von 80 bis 200°C und Drücken bis 600 bar mit CO/H₂ hydroformyliert und im gleichen Schritt aminiert.

7. Verfahren gemäß Anspruch 6, dadurch gekennzeichnet, daß man das Ammoniak zumindest teilweise in Form von wäßrigem Ammoniak einsetzt.

8. Verfahren gemäß Anspruch 6, dadurch gekennzeichnet, daß man als Rhodiumkatalysator Rhodiumacetat, Rhodiumnitrat, Rhodiumdicarbonylacetylacetonat oder Triphenylphosphinrhodiumcarbonylwasserstoff oder Mischungen der genannten Rhodiumverbindungen mit tertiären Phosphinen oder Phosphiten verwendet.

9. Verwendung von überwiegend sekundäre Polyisobutenamine enthaltenden Gemischen als Zusatz zu Kraft- und Schmierstoffen, wie sie gemäß dem Verfahren des Anspruchs 6 durch gleichzeitige Oxierung und Aminierung erhalten werden.

10. Polyisobutenamingemische aus primären, sekundären und tertiären Polyisobutenaminen, dadurch gekennzeichnet, daß sie überwiegend sekundäre Polyisobutenamine der Formel I enthalten 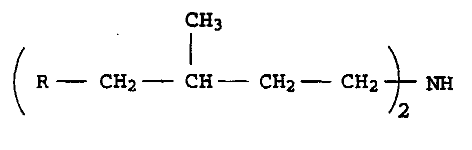 in der R ein Polyisobutenrest mit 6 bis 45 Isobtyleneinheiten bedeutet, in dem bis zu 20 % der Isobutyleneinheiten durch n-Butyleneinheiten ersetzt sein können.

## Claims

1. A fuel or lubricant composition containing polyisobutenamines, which contains at least one secondary polyisobutenamine of the formula I 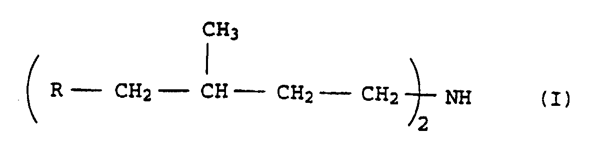 where R is a polyisobutenyl radical having 6 to 45 isobutylene units, where up to 20% of the isobutylene units may have been replaced by n-butylene units, with the proviso that the amount of secondary polyisobutenamine is greater than the amount of any corresponding primary or tertiary polyisobutenamine which may also be present.

2. A fuel composition as claimed in claim 1, which contains at least 20 ppm of a secondary polyisobutenamine of the formula I as claimed in claim 1.

3. A lubricant composition as claimed in claim 1, which contains at least 0.5% by weight, based on the lubricant, of a secondary polyisobutenamine of the formula I as claimed in claim 1.

4. A fuel or lubricant composition as claimed in claim 1, wherein at least 50% by weight of the total content of primary, secondary and tertiary polyisobutenamines are secondary polyisobutenamines of the formula I.

5. A fuel or lubricant composition as claimed in claim 1, which contains secondary polyisobutenamines of the formula I in which the polyisobutenyl radical contains from 8 to 35 isobutylene units.

6. A process for the preparation of a mixture of polyisobutenamines which predominantly consists of secondary polyisobutenamines of the formula I as claimed in claim 1, which comprises hydroformylating polyisobutenes of the formula II which contain predominantly terminal double bonds, 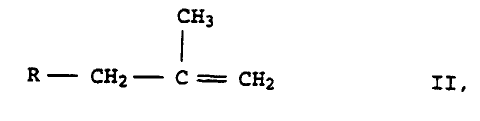 where R is as defined in claim 1, in the presence of an at least equivalent amount of ammonia in the presence of a rhodium catalyst which is capable of forming rhodium carbonyl complexes under the reaction conditions, at from 80 to 200°C and at up to 600 bar using CO/H₂, and aminating the product in the same step.

7. A process as claimed in claim 6, wherein at least some of the ammonia is used in the form of aqueous ammonia.

8. A process as claimed in claim 6, wherein the rhodium catalyst used is rhodium acetate, rhodium nitrate, dicarbonylrhodium acetoacetonate or hydridocarbonyl(triphenylphosphine)rhodium, or mixtures of said rhodium compounds with tertiary phosphines or phosphites.

9. The use of a mixture containing predominantly secondary polyisobutenamines as an additive to fuels and lubricants, as obtained by a process as claimed in claim 6 by simultaneous hydroformylation and amination.

10. A polyisobutenamine mixture comprising primary, secondary and tertiary polyisobutenamines, which contains predominantly secondary polyisobutenamines of the formula I 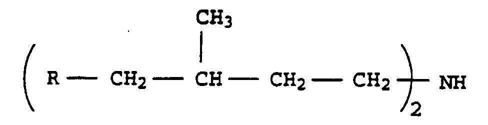 where R is a polyisobutenyl radical having 6 to 45 isobutylene units in which up to 20% of the isobutylene units may have been replaced by n-butylene units.

## Revendications

1. Composition de lubrifiant ou de carburant contenant des polyisobutène-amines, caractérisée en ce qu'elle contient au moins une polyisobutène-amine secondaire de formule I 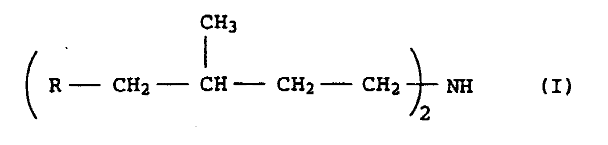 dans laquelle R représente un reste polyisobutène ayant 6 à 45 motifs isobutylène, où jusqu'à 20% des motifs isobutylène peuvent être remplacés par des motifs n-butylène, étant spécifié que la quantité de polyisobutène-amine secondaire est supérieure à la quantité d'une polyisobutène-amine primaire ou tertiaire correspondante éventuellement contenue.

2. Composition de carburant selon la revendication 1, caractérisée en ce qu'elle contient au moins 20 ppm d'une polyisobutène-amine secondaire de formule I selon la revendication 1.

3. Composition de lubrifiant selon la revendication 1, caractérisée en ce qu'elle contient au moins 0,5% en poids, par rapport au lubrifiant, d'une polyisobutène-amine secondaire de formule I selon la revendication 1.

4. Composition de lubrifiant et de carburant selon la revendication 1, caractérisée en ce que les polyisobutène-amines secondaires de formule I représentent au moins 50% en poids, par rapport à la teneur totale en polyisobutène-amines primaires, secondaires et tertiaires.

5. Composition de lubrifiant et de carburant selon la revendication 1, caractérisée en ce qu'elle contient des polyisobutène-amines secondaires de formule I dans lesquelles le reste polyisobutène comporte 8 à 35 motifs isobutylène.

6. Procédé de préparation d'un mélange de polyisobutène-amines, principalement constitué de polyisobutène-amines secondaires de formule I selon la revendication 1, caractérisé en ce que, dans la même étape, on hydroformyle avec CO/H₂ et on amine principalement les polyisobutènes de formule II présentant des doubles liaisons terminales 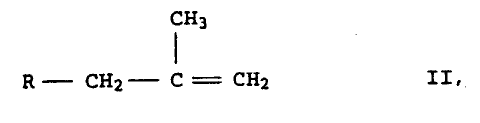 dans laquelle R prend la signification donnée dans la revendication 1, en présence d'une quantité au moins équivalente d'ammoniac sous l'action d'un catalyseur au rhodium qui peut, dans les conditions réactionnelles, former des complexes rhodium-carbonyle, à des températures de 80 à 200°C et sous des pressions allant jusqu'à 600 bar.

7. Procédé selon la revendication 6, caractérisé en ce que l'on utilise l'ammoniac au moins partiellement sous forme d'ammoniac aqueux.

8. Procédé selon la revendication 6, caractérisé en ce que l'on utilise en tant que catalyseur au rhodium, de l'acétate de rhodium, du nitrate de rhodium, du dicarbonylacétylacétonate de rhodium ou de la triphénylphosphine de rhodium hydrogénocarbonylé ou des mélanges des composés du rhodium cités avec des phosphines tertiaires ou avec des phosphites.

9. Utilisation de mélanges contenant essentiellement des polyisobutène-amines secondaires, en tant qu'additif pour carburants et lubrifiants, tels qu'ils sont obtenus selon le procédé de la revendication 6 par oxydation et amination simultanées.

10. Mélanges de polysobutène-amines à base de polyisobutène-amines primaires, secondaires et tertiaires, caractérisés en ce qu'ils contiennent essentiellement des polyisobutène-amines secondaires de formule I 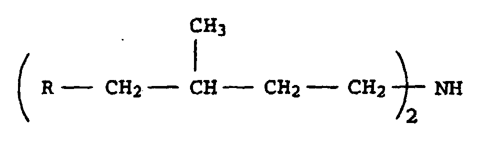 dans laquelle R représente un reste polyisobutène ayant 6 à 45 motifs isobutylène, dans lequel jusqu'à 20% des motifs isobutylène peuvent être remplacés par des motifs n-butylène.
